# EUROPÄISCHE PATENTSCHRIFT

(11) **EP 3 446 584 B1**
(45) Veröffentlichungstag und Bekanntmachung des Hinweises auf die Patenterteilung: **27.10.2021**
(21) Anmeldenummer: 18186059.4
(22) Anmeldetag: 27.07.2018
(51) Int. Cl.: A42B 3/06, A42C 2/00

(54) **VERFAHREN ZUM HERSTELLEN EINES SCHUTZHELMS UND NACH DIESEM VERFAHREN HERGESTELLTER SCHUTZHELM**
METHOD FOR MANUFACTURING A CARPET AND CARPET MANUFACTURED ACCORDING TO THIS METHOD
PROCÉDÉ DE FABRICATION D'UN CASQUE DE PROTECTION ET CASQUE DE PROTECTION FABRIQUÉ SELON LEDIT PROCÉDÉ

(30) Priorität: 25.08.2017 DE 102017119535
(43) Veröffentlichungstag der Anmeldung: 27.02.2019
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- EP-A2- 0 096 763
- EP-A2- 2 071 969
- DE-U1- 9 204 816
- US-A- 5 651 145
- US-A- 5 699 561

## Beschreibung

Die vorliegende Erfindung betrifft ein Verfahren zum Herstellen eines Schutzhelms, insbesondere eines Fahrradhelms, der einen stoßabsorbierenden Helmkörper mit einer konkaven Innenseite und einer konvexen Außenseite sowie eine an der Außenseite des Helmkörpers angeordnete Außenschale aufweist, mit den Schritten: Einlegen der Außenschale in eine Gießform und Einfüllen eines Gießmaterials in die Gießform an wenigstens einer Einfüllstelle, um den Helmkörper zu bilden, wobei das Gießmaterial sich mit einer Innenseite der Außenschale verbindet. Die Erfindung betrifft ferner einen nach diesem Verfahren hergestellten Schutzhelm.

Ein derartiger Schutzhelm, insbesondere Fahrradhelm, dient zum Schutz des Benutzers gegen Kopfverletzungen im Falle eines Sturzes oder eines Anpralls eines Objekts an dem Kopf des Benutzers. Hierfür umfasst der Schutzhelm einen Helmkörper, der eine generell konkav geformte, dem Kopf des Benutzers zugewandte Innenseite und eine generell konvex geformte, dem Kopf des Benutzers abgewandte Außenseite aufweist. Insbesondere bei einer Anwendung als Fahrradhelm kann der Schutzhelm mehrere Belüftungsöffnungen aufweisen, die durch die Außenschale und durch den Helmkörper hindurch verlaufen. Der Helmkörper soll die bei einem Stoß (Aufprall oder Anprall) auf den Schutzhelm einwirkende kinetische Energie durch inelastische und/oder elastische Verformung möglichst weitgehend absorbieren. An dem Helmkörper kann außerdem ein Gurtfixiersystem befestigt sein, mittels dessen der Helmkörper am Kopf des Benutzers fixiert werden kann und das beispielsweise mehrere Nacken- und Kinngurte umfassen kann.

Der Schutzhelm umfasst ferner eine an der Außenseite des Helmkörpers angeordnete Außenschale, die entsprechend dem Helmkörper eine generell konkav geformte Innenseite und eine generell konvex geformte Außenseite aufweisen kann. Die Außenschale kann ebenfalls eine Schutzfunktion ausüben (z.B. Stoßdämpfung oder Verringerung des Reibungskoeffizienten für ein Entlanggleiten des Schutzhelms an einer rauen Oberfläche), oder sie erfüllt im Wesentlichen nur eine dekorative Funktion.

Bei einem Herstellungsverfahren nach der sogenannten Inmold-Technik wird die Außenschale in eine Gießform eingelegt. Sodann wird an wenigstens einer Einfüllstelle ein Gießmaterial in die Gießform eingefüllt, um den Helmkörper zu bilden, wobei das Gießmaterial sich mit der Innenseite der Außenschale verbindet. Durch dieses Verfahren kann mit wenigen Arbeitsschritten eine dauerhaft kraftschlüssige Verbindung zwischen dem Helmkörper und der Außenschale hergestellt werden. Hierbei kann je nach Wahl des Gießmaterials ein Aufschäumen des Gießmaterials vorgesehen sein. Das Verfahren kann insbesondere auch als ein Spritzgießverfahren durchgeführt werden, bei dem das Gießmaterial (als Spritzgießmaterial) unter Druck in die Gießform eingefüllt bzw. eingespritzt wird.

Bei einem derartigen Herstellungsverfahren bestehen jedoch unerwünschte Einschränkungen, was die mögliche Formgebung des Helmkörpers betrifft. Insbesondere können komplexe Formen - beispielsweise verzweigte Belüftungs- oder Stabilisierungsstrukturen - nicht leicht erzeugt werden, da das Gießmaterial sich vor dem Erstarren nicht beliebig weit innerhalb der Gießform ausbreiten kann.

Aus EP 0 096 763 A2, US 5 651 145 A und US 5 699 561 A sind jeweils ein Verfahren zum Herstellen eines Schutzhelms und ein entsprechender Schutzhelm bekannt, der einen stoßabsorbierenden Helmkörper aufweist, wobei ein Gießmaterial in eine Gießform an wenigstens einer Einfüllstelle eingefüllt wird, um den Helmkörper zu bilden, wobei die Einfüllstelle an der Außenseite des gebildeten Helmkörpers vorgesehen ist. Aus EP 2 071 969 A2 und DE 92 04 816 U1 sind weitere Herstellungsverfahren und entsprechende Schutzhelme bekannt.

Es ist eine Aufgabe, ein Verfahren zum Herstellen eines Schutzhelms der genannten Art anzugeben, welches die Herstellung des Schutzhelms noch weiter vereinfacht und insbesondere auch das Erzeugen komplexer Formen des Helmkörpers ermöglicht. Ferner soll ein entsprechender Schutzhelm angegeben werden.

Diese Aufgabe wird durch ein Verfahren mit den Merkmalen des Anspruchs 1 gelöst.

Bei einem derartigen Verfahren ist die Einfüllstelle für das Gießmaterial an der Außenseite des gebildeten Helmkörpers vorgesehen, wobei die Außenschale im Bereich der Einfüllstelle eine Freistellung aufweist.

Bei dem erfindungsgemäßen Verfahren wird entsprechend der Inmold-Technologie das Gießmaterial in die Gießform eingefüllt, während die Außenschale des zu bildenden Schutzhelms bereits in die Gießform eingelegt ist. Das Einfüllen des Gießmaterials in die Gießform erfolgt an wenigstens einer Einfüllstelle, die an der (konvexen) Außenseite des zu bildenden Helmkörpers vorgesehen ist. Die Gießform umfasst hierfür wenigstens einen entsprechenden Einfüllkanal für das Gießmaterial. Die genannte Einfüllstelle ist diejenige Stelle der Außenseite des zu bildenden bzw. gebildeten Helmkörpers, an welche der Einfüllkanal der Gießform mündet. Um ein derartiges Einfüllen des Gießmaterials an der Außenseite des Helmkörpers bzw. an der entsprechenden (konkaven) Innenfläche der Gießform zu ermöglichen, weist die (in die Gießform eingelegte) Außenschale im Bereich der genannten Einfüllstelle eine Freistellung auf, also eine Unterbrechung dergestalt, dass unmittelbar nach dem Gießvorgang und nach dem Entfernen des Helmkörpers und der Außenschale aus der Gießform die Einfüllstelle des Helmkörpers an der Außenseite des gebildeten Helmkörpers freiliegt.

Somit wird abweichend von der üblichen Vorgehensweise bei der Herstellung von Schutzhelmen nach der Inmold-Technik auch an der Außenseite des Helmkörpers wenigstens eine Einfüllstelle für das Gießmaterial vorgesehen. Zwar bildet eine derartige Einfüllstelle an der Oberfläche des Helmkörpers eine grundsätzlich wahrnehmbare Störung des ansonsten homogen erzeugbaren Erscheinungsbildes des Helmkörpers, weshalb es naheliegend ist, die Einfüllstelle für das Gießmaterial an der (konkaven) Innenseite des Helmkörpers vorzusehen, die bei Benutzung des Schutzhelms dem Kopf des Benutzers zugewandt und somit nicht sichtbar ist. Indem jedoch abweichend von dieser üblichen Vorgehensweise wenigstens eine Einfüllstelle an der Außenseite des Helmkörpers angeordnet ist, gestaltet sich die Formgebung des Helmkörpers flexibler, da zusätzliche Möglichkeiten für das Einfüllen des Gießmaterials in die Gießform an geeigneten Positionen bestehen. Hierdurch ist es möglich, auch nach der Inmold-Technik komplexe Helmstrukturen zu erzeugen, beispielsweise mit einer Vielzahl von Rippen und Kanälen an der Innenseite des Helmkörpers. Wenn die Einfüllstelle(n) für das Gießmaterial an der Außenseite des Helmkörpers vorgesehen ist/sind, kann auch der Aufbau der Gießform einfacher gestaltet werden. Insbesondere kann eine flexiblere Anordnung der Einfüllkanäle (auch an der konvexen Außenseite des Helmkörpers) die Anordnung der in einer Gießform üblicherweise benötigten Schieber vereinfachen.

Gemäß einer Ausführungsform kann die Einfüllstelle für das Gießmaterial von einem Randbereich des gebildeten Helmkörpers beabstandet angeordnet sein. Hierdurch ist eine weitflächige Verteilung des Gießmaterials innerhalb der Gießform möglich.

Gemäß einer weiteren Ausführungsform kann das Gießmaterial an mehreren Einfüllstellen in die Gießform eingefüllt werden, d.h. die Gießform kann mehrere Einfüllkanäle für das Gießmaterial aufweisen. Bei dieser Ausführungsform kann wenigstens eine der mehreren Einfüllstellen (insbesondere auch jede der mehreren Einfüllstellen) an der Außenseite des gebildeten Helmkörpers vorgesehen sein. Auch hierdurch kann eine weitflächige homogene Verteilung des Gießmaterials innerhalb der Gießform auch bei einer komplexen Formgebung erreicht werden.

Gemäß einer Ausführungsform kann als Gießmaterial expandierter Polystyrol-Hartschaum (EPS) vorgesehen sein.

Gemäß einer weiteren Ausführungsform kann die Gießform eine Spritzgießform sein, wobei das Gießmaterial ein Spritzgießmaterial ist, das unter Druck in die Spritzgießform eingefüllt wird.

Was die genannte Freistellung der Außenschale im Bereich der Einfüllstelle für das Gießmaterial betrifft, so kann die die Freistellung umfänglich geschlossen sein, d.h. die Außenschale umschließt die Einfüllstelle des Helmkörpers umfänglich. Hierbei kann die Außenschale zugleich eine Belüftungsöffnung des Helmkörpers umschließen.

Die Außenschale des Schutzhelms kann einteilig oder mehrteilig sein.

Die Außenschale des Schutzhelms kann beispielsweise eine Schale, insbesondere eine Folie, aus Polyvinylchlorid (PVC), Polyethylenterephtalat (PET) oder einem Polycarbonat (PC) aufweisen.

Gemäß einer vorteilhaften Ausführungsform kann nach dem Entfernen des Helmkörpers und der hiermit verbundenen Außenschale aus der Gießform die Außenseite des Helmkörpers im Bereich der Einfüllstelle mit einem Abdeckteil überdeckt werden. Bei dem Abdeckteil kann es sich insbesondere um ein Schalenteil handeln, welches zumindest im Wesentlichen dem Erscheinungsbild der Außenschale des Schutzhelms entspricht. Hierdurch kann mit einem geringen Material- und Arbeitsaufwand die visuell wahrnehmbare Einfüllstelle des Helmkörpers an dessen Außenseite kaschiert werden. Das entsprechende Schalenteil kann hinsichtlich Material und/oder Farbe der Außenschale des Schutzhelms entsprechen. Das Abdeckteil, insbesondere Schalenteil, kann allerdings auch aus einem anderen Material gebildet sein als die Außenschale des Schutzhelms, beispielsweise aus Acrylnitril-Butadien-Styrol-Copolymer (ABS), Polyethylen (PE), Polypropylen (PP), Aramid (insbesondere Kevlar), Glasfaser oder einer Kombination hiervon.

Das Abdeckteil, insbesondere Schalenteil, kann auch zusätzlich mit einem dämpfenden Material, insbesondere mit einer dämpfenden Materialschicht, versehen sein, das bzw. die beispielsweise angeschäumt oder in anderer Weise angebracht ist. Dies kann insbesondere bei einer Ausführungsform vorgesehen sein, bei der das Abdeckteil, insbesondere Schalenteil, zusätzliche oder andersartige Dämpfungseigenschaften besitzt oder aerodynamisch optimierte Flächen bildet.

Das Abdeckteil, insbesondere Schalenteil, kann eine Aufnahmeeinrichtung - beispielsweise eine Befestigungsöffnung, eine Befestigungsvertiefung oder eine Befestigungserhebung - zum Aufnehmen eines Helmzubehörs, z.B. einer Beleuchtungseinrichtung oder einer Kamera, aufweisen.

Das Befestigen des Abdeckteils an dem Helmkörper und/oder an der Außenschale kann beispielsweise mittels einer Rastverbindung oder durch Verkleben erfolgen.

Alternativ hierzu kann beispielsweise vorgesehen sein, dass der Schutzhelm mehrere Belüftungsöffnungen aufweist, die durch die Außenschale und durch den Helmkörper hindurch verlaufen, wobei die an der Außenseite des Helmkörpers vorgesehene Einfüllstelle an einer Begrenzungsfläche einer der Belüftungsöffnungen angeordnet ist. Bei einer solchen Ausführungsform kann die Einfüllstelle für das Gießmaterial relativ zu der generell konvexen Oberfläche des Helmkörpers zurückversetzt angeordnet sein, so dass die Einfüllstelle visuell weniger auffällt.

Gemäß einer weiteren alternativen Ausführungsform kann der Schutzhelm eine Vertiefung zum Aufnehmen eines Helmzubehörs, z.B. einer Beleuchtungseinrichtung oder einer Kamera, aufweisen, wobei die an der Außenseite des Helmkörpers vorgesehene Einfüllstelle für das Gießmaterial an einer Begrenzungsfläche der Vertiefung angeordnet ist. Auch hierdurch kann die Einfüllstelle relativ zu der generell konvexen Oberfläche des Helmkörpers zurückversetzt angeordnet oder sogar durch ein in die Vertiefung eingesetztes Helmzubehör überdeckt sein, so dass die Einfüllstelle visuell weniger oder überhaupt nicht wahrgenommen wird.

Die Aufgabe der Erfindung wird auch durch einen Schutzhelm mit den Merkmalen des Anspruchs 6 gelöst.

Ein derartiger Schutzhelm weist einen stoßabsorbierenden Helmkörper sowie eine an der Außenseite des Helmkörpers angeordnete Außenschale auf und wird nach einem Verfahren gemäß einer der vorstehend beschriebenen Ausführungsformen hergestellt, wobei der Helmkörper an seiner Oberfläche wenigstens eine Einfüllstelle für das den Helmkörper bildende Gießmaterial aufweist, wobei die Einfüllstelle an der Außenseite des Helmkörpers angeordnet ist, und wobei die Außenschale im Bereich der Einfüllstelle eine Freistellung aufweist.

Bei einem derartigen Schutzhelm kann die Außenseite des Helmkörpers im Bereich der Einfüllstelle mit einem Abdeckteil der erläuterten Art, insbesondere mit einem Schalenteil, überdeckt sein.

Weitere Ausführungsformen sind in den abhängigen Ansprüchen genannt.

Die Erfindung wird nachfolgend lediglich beispielhaft unter Bezugnahme auf die Zeichnungen erläutert.
- Fig. 1: zeigt eine Querschnittsansicht eines in einer Gießform befindlichen Fahrradhelms.
- Fig. 2: zeigt eine Seitenansicht eines Fahrradhelms mit einem an der Außenseite zu befestigenden Schalenteil.

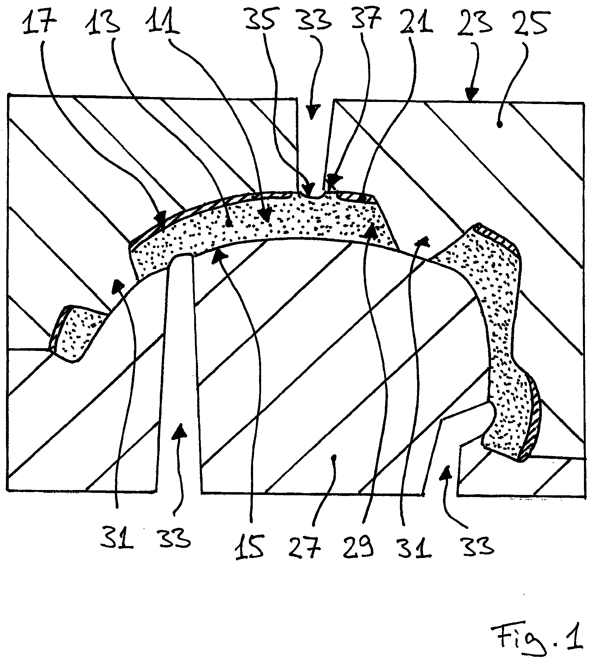

Der in Fig. 1 gezeigte Fahrradhelm 11 umfasst einen Helmkörper 13, beispielsweise aus EPS-Hartschaum, mit einer konkaven Innenseite 15 und einer konvexen Außenseite 17, sowie eine an der Außenseite 17 des Helmkörpers 13 angeordnete Außenschale 21, beispielsweise aus einem Polycarbonat. Der Fahrradhelm 11 wird auf Basis einer Inmold-Technik hergestellt und befindet sich in dem in Fig. 1 gezeigten Zustand in einer Gießform 23, die eine Matrize 25 und eine Patrize 27 umfasst, welche einen Hohlraum 29 der Gießform 23 begrenzen. In der in Fig. 1 gezeigten Querschnittsansicht verläuft die zeichnerische Querschnittsebene durch mehrere Belüftungsöffnungen 31 des Fahrradhelms 11, so dass sowohl der Helmkörper 13 als auch die Außenschale 21 jeweils segmentartig erscheinen. Tatsächlich bilden der Helmkörper 13 und die Außenschale 21 jedoch jeweils eine zusammenhängende Struktur.

Für die Herstellung des Fahrradhelms 11 wird zunächst die Außenschale 21 in die Matrize 25 eingelegt, so dass eine konvexe Außenseite der Außenschale 21 an einer konkaven Innenfläche der Matrize 25 anliegt. Sodann wird die Gießform 23 geschlossen. Danach wird ein Gießmaterial in die Gießform 23 eingefüllt, um den Helmkörper 13 zu bilden. Hierfür weist die Gießform 23 drei Einfüllkanäle 33 auf. Der mittlere dieser drei Einfüllkanäle 33 befindet sich in der Matrize 25 und mündet an eine Einfüllstelle 35 des Helmkörpers 13, die an der Außenseite 17 des zu bildenden Helmkörpers 13, beabstandet von dem Rand des Helmkörpers 13, angeordnet ist. Damit das Gießmaterial durch den mittleren Einfüllkanal 33 in den Hohlraum 29 der Gießform 23 gelangen kann, weist die Außenschale 21 im Bereich der Einfüllstelle 35 eine Freistellung 37 auf, d.h. der zu bildende Helmkörper 13 ist an dieser Stelle nicht von der Außenschale 21 überdeckt.

Nach dem Einfüllen des Gießmaterials in die Gießform 23 verbindet sich dieses kraftschlüssig mit einer Innenseite der Außenschale 21. Nach einer Aushärtezeit kann die Gießform 23 geöffnet werden. Der Fahrradhelm 11 kann sodann aus der Gießform 23 entnommen und mit weiteren Ausstattungselementen versehen werden, beispielsweise einer innenseitigen Polsterung und einem Gurtfixiersystem.

Indem die Einfüllstelle 35 des mittleren Einfüllkanals 33 an der Außenseite 17 des Helmkörpers 13 angeordnet ist, ergeben sich neuartige Möglichkeiten für die Formgebung des Helmkörpers 13, da ein homogenes Verteilen des Gießmaterials innerhalb des Hohlraums 29 der Gießform 23 einfacher bewerkstelligt werden kann. Auch der Aufbau der Gießform 23 kann hierdurch einfacher gestaltet werden.

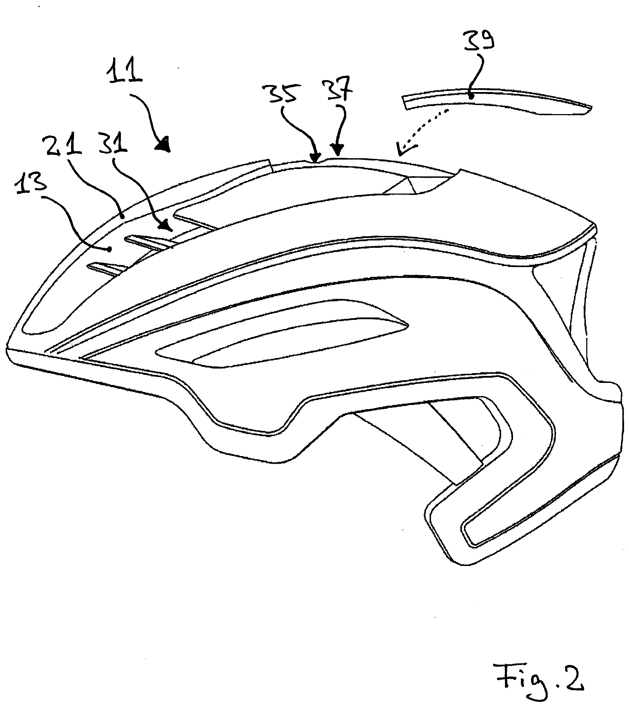

Aus Fig. 2 ist ersichtlich, dass bei einem derartigen Fahrradhelm 11 eine Einfüllstelle 35 an der Außenseite 17 des Helmkörpers 13 mittels eines Schalenteils 39 überdeckt werden kann (vgl. den gestrichelt dargestellten Pfeil). Das Schalenteil 39 kann hinsichtlich Material und/oder Farbe der Außenschale 21 entsprechen. Anstelle des Schalenteils 39 kann auch ein andersartiges Abdeckteil vorgesehen sein, wie vorstehend erläutert.

### Bezugszeichenliste

- 11: Fahrradhelm
- 13: Helmkörper
- 15: Innenseite
- 17: Außenseite
- 21: Außenschale
- 23: Gießform
- 25: Matrize
- 27: Patrize
- 29: Hohlraum
- 31: Belüftungsöffnung
- 33: Einfüllkanal
- 35: Einfüllstelle
- 37: Freistellung
- 39: Schalenteil

## Patentansprüche

1. Verfahren zum Herstellen eines Schutzhelms, insbesondere eines Fahrradhelms (11), der einen stoßabsorbierenden Helmkörper (13) mit einer konkaven Innenseite (15) und einer konvexen Außenseite (17) sowie eine an der Außenseite (17) des Helmkörpers (13) angeordnete Außenschale (21) aufweist, **gekennzeichnet durch** die Schritte:
- Einlegen der Außenschale (21) in eine Gießform (23), und
- Einfüllen eines Gießmaterials in die Gießform (23) an wenigstens einer Einfüllstelle (35), um den Helmkörper (13) zu bilden, wobei das Gießmaterial sich mit einer Innenseite der Außenschale (21) verbindet,
wobei die Einfüllstelle (35) an der Außenseite (17) des gebildeten Helmkörpers (13) vorgesehen ist, wobei die Außenschale (21) im Bereich der Einfüllstelle (35) eine Freistellung (37) aufweist.

2. Verfahren nach Anspruch 1,
wobei die Einfüllstelle (35) von dem Rand des Helmkörpers (13) beabstandet angeordnet ist.

3. Verfahren nach Anspruch 1 oder 2,
wobei das Gießmaterial an mehreren Einfüllstellen (35) in die Gießform (23) eingefüllt wird, wobei wenigstens eine der mehreren Einfüllstellen (35) an der Außenseite (17) des gebildeten Helmkörpers (13) vorgesehen ist.

4. Verfahren nach einem der vorhergehenden Ansprüche,
wobei die Freistellung (37) der Außenschale (21) umfänglich geschlossen ist.

5. Verfahren nach einem der vorhergehenden Ansprüche,
wobei nach dem Entfernen des Helmkörpers (13) und der hiermit verbundenen Außenschale (21) aus der Gießform (23) die Außenseite (17) des Helmkörpers (13) im Bereich der Einfüllstelle (35) mit einem Abdeckteil, insbesondere einem Schalenteil (39), überdeckt wird.

6. Schutzhelm, insbesondere Fahrradhelm (11), der einen stoßabsorbierenden Helmkörper (13) sowie eine an der Außenseite (17) des Helmkörpers (13) angeordnete Außenschale (21) aufweist, **dadurch gekennzeichnet dass** er nach einem Verfahren gemäß einem der vorhergehenden Ansprüche hergestellt worden ist, wobei der Schutzhelm mehrere Belüftungsöffnungen (31) aufweist, die durch die Außenschale (17) und durch den Helmkörper (13) hindurch verlaufen, wobei der Helmkörper (13) an seiner Oberfläche wenigstens eine Einfüllstelle (35) für das den Helmkörper (13) bildende Gießmaterial aufweist, wobei die Einfüllstelle (35) an der Außenseite (17) des Helmkörpers (13) angeordnet ist, wobei die Einfüllstelle (35) an der Oberfläche des Helmkörpers (13) eine wahrnehmbare Störung des Erscheinungsbildes des Helmkörpers (13) bildet,
**dadurch gekennzeichnet,**
**dass** die Außenschale (21) im Bereich der Einfüllstelle (35) eine Freistellung (37) aufweist.

7. Schutzhelm nach Anspruch 6,
wobei die Außenseite (17) des Helmkörpers (13) im Bereich der Einfüllstelle (35) mit einem Abdeckteil, insbesondere einem Schalenteil (39), überdeckt ist.

## Claims

1. A method of manufacturing a protective helmet, in particular a bicycle helmet (11), which has a shock-absorbing helmet body (13) having a concave inner side (15) and a convex outer side (17) and which has an outer shell (21) arranged at the outer side (17) of the helmet body (13), **characterized by** the steps:
- placing the outer shell (21) into a mold (23); and
- filling a casting material into the mold (23) at at least one filling point (35) to form the helmet body (13), wherein the casting material connects to an inner side of the outer shell (21),
wherein the filling point (35) is provided at the outer side (17) of the helmet body (23) formed, with the outer shell (21) having an opening (37) in the region of the filling point (35).

2. A method in accordance with claim 1,
wherein the filling point (35) is arranged spaced apart from the margin of the helmet body (13).

3. A method in accordance with claim 1 or claim 2,
wherein the casting material is filled into the mold (23) at a plurality of filling points (35), with at least one of the plurality of filling points (35) being provided at the outer side (17) of the helmet body (13) formed.

4. A method in accordance with any one of the preceding claims,
wherein the opening (37) of the outer shell (21) is peripherally closed.

5. A method in accordance with any one of the preceding claims,
wherein the outer side (17) of the helmet body (13) is covered by a cover part, in particular a shell part (39), in the region of the filling point (35) after the removal of the helmet body (13) and of the outer shell (21) connected thereto from the mold (23).

6. A protective helmet, in particular a bicycle helmet (11), which has a shock-absorbing helmet body (13) and an outer shell (21) arranged at the outer side (17) of the helmet body (13), **characterized in that** it has been manufactured in accordance with a method in accordance with any one of the preceding claims, wherein the protective helmet has a plurality of ventilation openings (31) which extend through the outer shell (17) and through the helmet body (13), wherein the helmet body (13) has at least one filling point (35) at its surface for the casting material forming the helmet body (13), wherein the filling point (35) is arranged at the outer side (17) of the helmet body (13), wherein the filling point (35) forms a perceivable disruption of the appearance of the helmet body (13) at the surface of the helmet body (13),
**characterized in that**
the outer shell (21) has an opening (37) in the region of the filling point (35).

7. A protective helmet (6) in accordance with claim 6,
wherein the outer side (17) of the helmet body (13) is covered by a cover part, in particular a shell part (39), in the region of the filling point (35).

## Revendications

1. Procédé de fabrication d'un casque de protection, en particulier d'un casque de vélo (11), qui présente un corps de casque (13) absorbant les chocs et ayant une face intérieure concave (15) et une face extérieure convexe (17), et une coque extérieure (21) disposée sur la face extérieure (17) du corps de casque (13), **caractérisé par** les étapes suivantes consistant à :
- placer la coque extérieure (21) dans un moule de coulée (23), et
- remplir le moule de coulée (23) d'un matériau de coulée à au moins un emplacement de remplissage (35) pour former le corps de casque (13), le matériau de coulée se liant à une face intérieure de la coque extérieure (21),
l'emplacement de remplissage (35) étant prévu sur la face extérieure (17) du corps de casque formé (13), la coque extérieure (21) présentant un dégagement (37) dans la zone de l'emplacement de remplissage (35).

2. Procédé selon la revendication 1,
dans lequel l'emplacement de remplissage (35) est disposé à une distance du bord du corps de casque (13).

3. Procédé selon la revendication 1 ou 2,
dans lequel le moule de coulée (23) est rempli du matériau de coulée à plusieurs emplacements de remplissage (35), l'un au moins desdits plusieurs emplacements de remplissage (35) étant prévu sur la face extérieure (17) du corps de casque formé (13).

4. Procédé selon l'une des revendications précédentes,
dans lequel le dégagement (37) de la coque extérieure (21) est fermé circonférentiellement.

5. Procédé selon l'une des revendications précédentes,
dans lequel, après le retrait du corps de casque (13) et de la coque extérieure (21), reliée à celui-ci, hors du moule de coulée (23), la face extérieure (17) du corps de casque (13) est recouverte, dans la zone de l'emplacement de remplissage (35), d'une partie de recouvrement, en particulier d'une partie de coque (39).

6. Casque de protection, en particulier casque de vélo (11), qui présente un corps de casque (13) absorbant les chocs et une coque extérieure (21) disposée sur la face extérieure (17) du corps de casque (13),
**caractérisé en ce qu'**il a été fabriqué par un procédé selon l'une des revendications précédentes, le casque de protection présentant plusieurs ouvertures de ventilation (31) traversant la coque extérieure (17) et le corps de casque (13), le corps de casque (13) présentant sur sa surface au moins un emplacement de remplissage (35) pour le matériau de coulée formant le corps de casque (13), l'emplacement de remplissage (35) étant disposé sur la face extérieure (17) du corps de casque (13), l'emplacement de remplissage (35) formant, sur la surface du corps de casque (13), une perturbation perceptible de l'aspect esthétique du corps de casque (13),
**caractérisé en ce que**
la coque extérieure (21) présente un dégagement (37) dans la zone de l'emplacement de remplissage (35).

7. Casque de protection selon la revendication 6,
dans lequel la face extérieure (17) du corps de casque (13) est recouverte, dans la zone de l'emplacement de remplissage (35), d'une partie de recouvrement, en particulier d'une partie de coque (39).
